# EUROPEAN PATENT APPLICATION

(11) **EP 4 671 908 A1**
(43) Date of publication of application: **31.12.2025**
(21) Application number: 24759528.3
(22) Date of filing: 04.02.2024
(51) Int. Cl.: G05F 1/56

(54) **LDO CIRCUIT HAVING CURRENT LIMITING FUNCTION, AND CHIP AND ELECTRONIC DEVICE**

(30) Priority: 24.02.2023 CN 202310158399
(71) Applicant: Vanchip (Tianjin) Technology Co. Ltd, Tianjin 300457 (CN)
(72) Inventor: GAO, Chenyang, Tianjin 300457 (CN); LIN, Sheng, Tianjin 300457 (CN)
(74) Representative: Wang, Bo
(86) International application number: PCT/CN2024/075711
(87) International publication number: WO 2024/174851

(57) **Abstract**

Provided are an LDO circuit having a current limiting function, and a chip and an electronic device. The LDO circuit comprises a bandgap reference circuit (101), an error amplifier (102), a power transistor (103), a feedback resistor network (104), and a current limiting function module (105), wherein the current limiting function module (105) comprises a load current mirror unit (107), a reference current unit (108), a current comparison unit (109), a hysteresis shaping unit (110), and a control current output unit (111). The current limiting function module (105) controls the on or off of a negative feedback loop and a current limiting output unit in the LDO circuit by comparing a load current with a reference current, so as to control an output current, thereby providing a stable direct current bias voltage for a radio frequency chip under working conditions such as large power and a complex application environment.

## Description

### BACKGROUND

### Technical Field

The present disclosure relates to an LDO circuit having a current limiting function, and also relates to an integrated circuit chip including the LDO circuit having the current limiting function, and a corresponding electronic device, belonging to the technical field of power regulating circuits.

### Related Art

Low dropout regulator (LDO) is a regulated power circuit with excellent performance such as low power consumption and low noise, is usually used as a voltage bias circuit of a radio frequency chip, and mainly plays a role of providing direct current working voltage for the radio frequency chip. With the rapid development of communication technology, the output power of the radio frequency chip is increasing, and the application environment is becoming increasingly complex. High power output and complex application environments make it easy for the radio frequency chip to operate under high current working conditions. High current working conditions may cause the radio frequency chip and devices such as filters and switching transistors on the same link to burn out, resulting in irreversible device damage and system failure. Therefore, providing an LDO circuit having a current limiting function has become a very necessary technical requirement.

### SUMMARY

The primary technical problem to be solved by the present disclosure is to provide an LDO circuit having a current limiting function.

Another technical problem to be solved by the present disclosure is to provide an integrated circuit ship including the LDO circuit.

Yet another technical problem to be solved by the present disclosure is to provide an electronic device including the LDO circuit.

To achieve the above purposes, the present disclosure adopts the following technical solution:
According to a first aspect, an embodiment of the present disclosure provides an LDO circuit having a current limiting function, which includes a bandgap reference circuit, an error amplifier, a power transistor, a feedback resistor network, and a current limiting function module. The bandgap reference circuit provides a bias current and a reference voltage for the error amplifier, and provides a reference current for the current limiting function module. An output end of the error amplifier is connected with a gate of the power transistor, and a drain of the power transistor is connected with the feedback resistor network and an output end of the LDO circuit. An output end of the feedback resistor network is connected with an inverting end of the error amplifier to form a negative feedback loop of the LDO circuit. A first output end of the current limiting function module is connected with the output end of the feedback resistor network and the inverting end of the error amplifier, and a second output end of the current limiting function module is connected with the gate of the power transistor and the output end of the error amplifier.

Preferably, the current limiting function module includes: a load current mirror unit, configured to proportionally mirror and extract an output current of the power transistor, and provide the output current to a current comparison unit as a load current; a reference current unit, configured to proportionally mirror and extract a reference current provided by the bandgap reference circuit, and provide the reference current to the current comparison unit as a reference current; the current comparison unit, configured to compare an inputted load current with the reference current, a comparison result forming a high/low level control signal outputted to a hysteresis shaping unit; the hysteresis shaping unit, configured to perform shaping and hysteresis processing on the inputted control signal, and output a control signal for controlling on and off of a control current output unit; and the control current output unit, configured to control disconnection or access of the feedback resistor network, and limit a magnitude of the output current of the power transistor.

An input end of the reference current unit is connected with the bandgap reference circuit. An output end of the reference current unit is connected with a first input end of the current comparison unit. An input end of the load current mirror unit is connected with the power transistor. An output end of the load current mirror unit is connected with a second input end of the current comparison unit. An output end of the current comparison unit is connected with an input end of the hysteresis shaping unit. An output end of the hysteresis shaping unit is connected with an input end of the control current output unit. A first output end of the control current output unit is connected with the output end of the feedback resistor network and the inverting end of the error amplifier, and a second output end of the control current output unit is connected with the output end of the error amplifier and the gate of the power transistor.

Preferably, the load current mirror unit is composed of a first PMOS transistor, a first resistor, a first NMOS transistor, and a second NMOS transistor. A gate of the first PMOS transistor is connected with the gate of the power transistor and a drain of an enable control PMOS transistor. A source of the first PMOS transistor is connected with a power end. A drain of the first PMOS transistor is connected with the first resistor and a gate of the first NMOS transistor, and the other end of the first resistor is connected with a drain of the first NMOS transistor and a gate of the second NMOS transistor. A source of the first NMOS transistor is connected with a drain of the second NMOS transistor. A source of the second NMOS transistor is connected with a ground potential end. At the same time, the gate of the first NMOS transistor and the gate of the second NMOS transistor are respectively connected with a gate of a seventh NMOS transistor and a gate of an eighth NMOS transistor in the current comparison unit.

Preferably, the reference current unit is composed of a third NMOS transistor, a fourth NMOS transistor, a fifth NMOS transistor, a sixth NMOS transistor, a second resistor, a third resistor, a second PMOS transistor, a third PMOS transistor, and a first enable control transistor. A reference current output end of the bandgap reference circuit is connected with the second resistor and a gate of the third NMOS transistor, and the other end of the second resistor is connected with a drain of the third NMOS transistor and a gate of the fourth NMOS transistor. A source of the third NMOS transistor is connected with a drain of the fourth NMOS transistor. A source of the fourth NMOS transistor is connected with a source of the first enable control transistor and a ground potential end. A gate of the first enable control transistor is connected with an enable non signal end. A drain of the first enable control transistor is connected with a gate of the fourth NMOS transistor and a gate of the fifth NMOS transistor. A source of the fifth NMOS transistor is connected with the ground potential end. A drain of the fifth NMOS transistor is connected with a source of the sixth NMOS transistor. A gate of the sixth NMOS transistor is connected with the gate of the third NMOS transistor. A drain of the sixth NMOS transistor is connected with the third resistor and a gate of the third PMOS transistor, and the other end of the third resistor is connected with a drain of the third PMOS transistor and a gate of the second PMOS transistor. A source of the third PMOS transistor is connected with a drain of the second PMOS transistor. A source of the second PMOS transistor is connected with the power end. At the same time, the gate of the third PMOS transistor and the gate of the second PMOS transistor are respectively connected with a gate of a fifth PMOS transistor and a gate of a fourth PMOS transistor in the current comparison unit.

Preferably, the current comparison unit is composed of a second enable control transistor, the fourth PMOS transistor, the fifth PMOS transistor, the seventh NMOS transistor, and the eighth NMOS transistor. A gate of the second enable control transistor is connected with an enable signal end. A source of the second enable control transistor is connected with the power end. A drain of the second enable control transistor is connected with a drain of the fifth PMOS transistor and a drain of the seventh NMOS transistor on one hand, and is connected with an output end of the current comparison unit on the other hand. A source of the fifth PMOS transistor is connected with a drain of the fourth PMOS transistor. A source of the fourth PMOS transistor is connected with the power end. A gate of the fifth PMOS transistor and a gate of the fourth PMOS transistor are respectively connected with the gate of the third PMOS transistor and the gate of the second PMOS transistor in the reference current unit. A source of the seventh NMOS transistor is connected with a drain of the eighth NMOS transistor. A source of the seventh NMOS transistor is connected with the ground potential end. A gate of the seventh NMOS transistor and a gate of the eighth NMOS transistor are respectively connected with the gate of the first NMOS transistor and the gate of the second NMOS transistor in the load current mirror unit.

Preferably, the control current output unit is composed of a third enable control transistor, a fourth enable control transistor, and a sixth PMOS transistor. A gate of the third enable control transistor is connected with an enable signal end. A source of the third enable control transistor is connected with the power end. A drain of the third enable control transistor is connected with a source of the sixth PMOS transistor. A gate and a drain of the sixth PMOS transistor are short-circuited and then connected with the gate of the power transistor and the output end of the error amplifier. A gate of the fourth enable control transistor is connected with an enable non signal end. A source of the fourth enable control transistor is connected with a ground potential end. A drain of the fourth enable control transistor is connected with the inverting end of the error amplifier and the output end of the feedback resistor network.

Preferably, the hysteresis shaping unit is a Schmitt shaping circuit with a hysteresis effect. The Schmitt shaping circuit includes even number stages of inverters and a regulating unit configured to achieve the hysteresis effect, and a hysteresis width may be changed by adjusting a size of a transistor in the regulating unit. An input signal and an output signal of the hysteresis shaping unit have the same level state.

Preferably, the output signal of the hysteresis shaping unit is used as an enable signal, and passes through the inverter to obtain an enable non signal for controlling the on and off of the control current output unit.

Preferably, when the load current is less than a set current threshold of the reference current, the output end of the current comparison unit is at a high level, the enable signal is at a high level, the enable non signal is at a low level, the control current output unit is off, the negative feedback loop access works normally, the power transistor provides an output current, and the LDO circuit outputs a stable voltage.

When the load current is equal to the set current threshold of the reference current, the LDO circuit maintains a working state of a previous moment.

When the load current is greater than the set current threshold of the reference current, the output end of the current comparison unit is at a low level, the enable signal is at a low level, the enable non signal is at a high level, the negative feedback loop is disconnected, the control current output unit is on to limit the magnitude of the output current of the power transistor, and the LOD circuit outputs a stable voltage.

Preferably, the current comparison unit extracts the load current and the reference current by using a circuit with a common-gate common-source current mirror structure composed of MOS transistors, and a current threshold for enabling the current limiting function may be set by adjusting a magnitude of a mirror ratio.

Preferably, in the control current output unit, the output current of the power transistor required to be limited may be set by adjusting a magnitude of a ratio of a current mirror composed of the sixth PMOS transistor and the power transistor.

Preferably, the current limiting function module (105) generates an enable control signal through hysteresis shaping processing according to a comparison result between the load current and the reference current to control on and off of the current limiting function and connection or disconnection of the negative feedback loop.

According to a second aspect, an embodiment of the present disclosure provides an integrated circuit chip, which includes the LDO circuit having the current limiting function described above.

According to a third aspect, an embodiment of the present disclosure provides an electronic device, which includes the LDO circuit having the current limiting function described above.

Compared with the existing technology, in the LDO circuit having the current limiting function provided by the present disclosure, the current limiting function module is additionally arranged, the negative feedback loop and the current limiting output unit are controlled to be on and off by comparing the load current with the reference current, so as to control the output current of the LDO circuit, thereby providing a stable direct current bias voltage for a radio frequency chip under working conditions such as large power and a complex application environment. Moreover, the current limiting function of the LDO circuit also protects the radio frequency chip and radio frequency devices on the same link from being damaged, thus greatly improving the service life of the radio frequency chip in the electronic device. Therefore, the LDO circuit having the current limiting function provided by the present disclosure has the beneficial effects such as ingenious and appropriate structural design, low production cost, strong flexibility, and excellent circuit performance.

### BRIEF DESCRIPTION OF THE DRAWINGS

FIG. 1 is a structural block diagram of an LDO circuit having a current limiting function provided by the present disclosure;
FIG. 2 is a schematic circuit diagram of an LDO circuit having a current limiting function according to an embodiment of the present disclosure;
FIG. 3 is a schematic circuit diagram of a hysteresis shaping unit in a current limiting function module according to an embodiment of the present disclosure;
FIG. 4 is a simulation test result chart of a load current of an LDO circuit according to an embodiment of the present disclosure; and
FIG. 5 is a schematic diagram of an electronic device adopting an LDO circuit provided by an embodiment of the present disclosure.

### DETAILED DESCRIPTION

The technical solutions of the present disclosure will be further described below in detail in combination with specific embodiments with reference to the drawings.

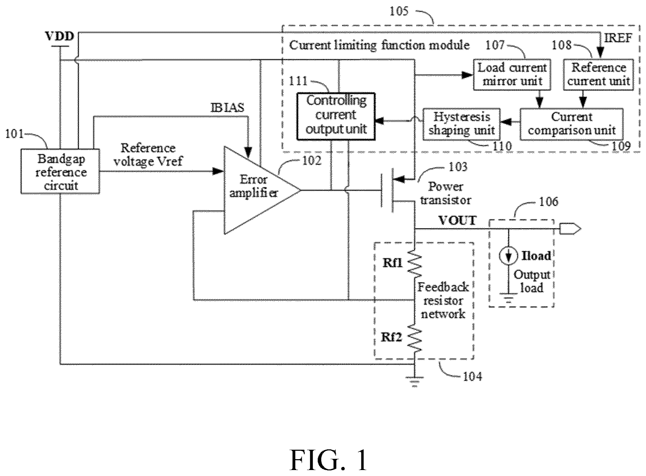

As shown in FIG. 1, an embodiment of the present disclosure provides an LDO circuit having a current limiting function, which includes a bandgap reference circuit 101, an error amplifier 102, a power transistor 103, a feedback resistor network 104, and a current limiting function module 105. An output load 106 of the LDO circuit is determined by application environments. A magnitude of an output load current is denoted as Iload.

The bandgap reference circuit 101, the error amplifier 102, the power transistor 103, and the feedback resistor network 104 are component modules of a typical LDO circuit, and form an LDO circuit with a negative feedback loop that outputs a stable voltage VOUT. In the present disclosure, on the basis of the typical LDO circuit, the current limiting function module 105 is additionally arranged. The function module is the key to achieve a current limiting function of the LDO circuit.

The bandgap reference circuit 101 provides a bias current IBIAS and a reference voltage Vref for the error amplifier 102, and provides a reference current IREF for a reference current unit 108 in the current limiting function module 105. The bandgap reference circuit 101 may be implemented by using a commonly used bandgap reference circuit.

The feedback resistor network 104 may be implemented by using a resistive voltage dividing circuit with a voltage dividing end connected with an inverting end of the error amplifier 102 to form the negative feedback loop of the LDO circuit.

An output end of the error amplifier 102 is connected with a gate of the power transistor 103. A drain of the power transistor 103 is connected with the feedback resistor network 104 and an output end of the LDO circuit.

The current limiting function module 105 includes a load current mirror unit 107, the reference current unit 108, a current comparison unit 109, a hysteresis shaping unit 110, and a control current output unit 111. An input end of the reference current unit 108 is connected with the bandgap reference circuit 101. An output end of the reference current unit 108 is connected with one input end of the current comparison unit 109. An input end of the load current mirror unit 107 is connected with the power transistor 103. An output end of the load current mirror unit 107 is connected with the other input end of the current comparison unit 109. An output end of the current comparison unit 109 is connected with an input end of the hysteresis shaping unit 110. An output end of the hysteresis shaping unit 110 is connected with an input end of the control current output unit 111. One output end of the control current output unit 111 is connected with the output end of the error amplifier 102 and the gate of the power transistor 103. The other output end of the control current output unit 111 is connected with the voltage dividing end of the feedback resistor network 104 and the inverting end of the error amplifier 102.

The load current mirror unit 107 proportionally extracts the output current of the power transistor 103 through a mirror transistor, and then provides the output current to the current comparison unit 109 as a load current through a current mirror circuit. The reference current unit 108 proportionally mirrors and extracts the reference current IREF provided by the bandgap reference circuit 101 through the current mirror circuit, and then provides the reference current to the current comparison unit 109 as a reference current through the current mirror circuit. The current comparison unit 109 compares the load current with the reference current, and a comparison result forms a high/low level control signal outputted to the hysteresis shaping unit 110. The hysteresis shaping unit 110 performs shaping on the inputted control signal to obtain a control signal with better quality and achieve a hysteresis effect. The control signal after shaping is used for controlling on and off of the control current output unit 111. The control current output unit 111 controls disconnection or access of the feedback resistor network 104 according to the control signal, and mirrors the bias current proportionally to the power transistor 103 according to a current value required to be limited as a target to limit a magnitude of the output current of the power transistor 103.

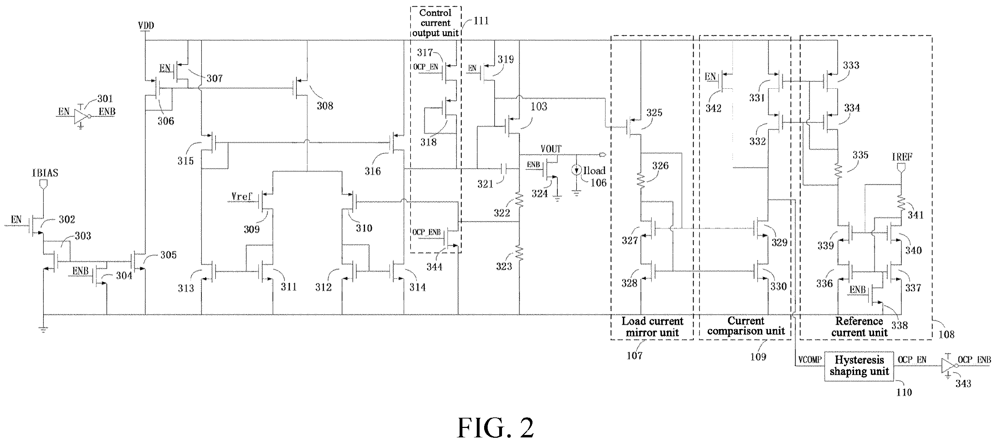

In an embodiment of the present disclosure, a specific structure of the LDO circuit having the current limiting function is as shown in FIG. 2 (the bandgap reference circuit 101 is not shown in the figure). 301 represents an inverter. An enable signal EN passes through the inverter 301 to obtain an enable non signal ENB An NMOS transistor 302, an NMOS transistor 304, an NMOS transistor 324, a PMOS transistor 307, and a PMOS transistor 319 are all enable control transistors that control on and off of the LDO circuit. An NMOS transistor 303 and an NMOS transistor 305, and a PMOS transistor 306 and a PMOS transistor 308 respectively form current mirrors to proportionally mirror the bias current IBIAS provided by the bandgap reference circuit 101, so as to provide a reference current for the error amplifier. A PMOS transistor 309 and a PMOS transistor 310 form an input differential pair of the error amplifier. An NMOS transistor 311 and an NMOS transistor 313, an NMOS transistor 312 and an NMOS transistor 314, and a PMOS transistor 315 and a PMOS transistor 316 respectively form current mirrors, which jointly form the error amplifier. The power transistor 103 is a PMOS transistor. A capacitor 321 is a Miller compensation capacitor. A resistor 322 and a resistor 323 form the feedback resistor network. VOUT is the output voltage of the LDO circuit. The magnitude of the output load current of the output load 106 of the LDO circuit is denoted as Iload.

A circuit structure and working principle of the current limiting function module 105 in the LDO circuit in the embodiment of the present disclosure will be described below in detail.

As shown in FIG. 2, the current limiting function module 105 includes the load current mirror unit 107, the reference current unit 108, the current comparison unit 109, the hysteresis shaping unit 110, and the control current output unit 111. A specific component structure of each functional unit is as follows:
The load current mirror unit 107 is composed of a first PMOS transistor 325, a first resistor 326, a first NMOS transistor 327, and a second NMOS transistor 328. A gate of the first PMOS transistor 325 is connected with the gate of the power transistor 103 and a drain of an enable control PMOS transistor 319. A source of the first PMOS transistor 325 is connected with a power end VDD. A drain of the first PMOS transistor 325 is connected with the first resistor 326 and a gate of the first NMOS transistor 327, and the other end of the first resistor 326 is connected with a drain of the first NMOS transistor 327 and a gate of the second NMOS transistor 328. A source of the first NMOS transistor 327 is connected with a drain of the second NMOS transistor 328. A source of the second NMOS transistor 328 is connected with a ground potential end. At the same time, the gate of the first NMOS transistor 327 and the gate of the second NMOS transistor 328 are respectively connected with a gate of a seventh NMOS transistor 329 and a gate of an eighth NMOS transistor 330 in the current comparison unit 109.

The reference current unit 108 is composed of a third NMOS transistor 340, a fourth NMOS transistor 337, a fifth NMOS transistor 336, a sixth NMOS transistor 339, a second resistor 341, a third resistor 335, a second PMOS transistor 333, a third PMOS transistor 334, and a first enable control transistor 338. A reference current IREF output end of the bandgap reference circuit (101) is connected with the second resistor 341 and a gate of the third NMOS transistor 340, and the other end of the second resistor 341 is connected with a drain of the third NMOS transistor 340 and a gate of the fourth NMOS transistor 337. A source of the third NMOS transistor 340 is connected with a drain of the fourth NMOS transistor 337. A source of the fourth NMOS transistor 337 is connected with a source of the first enable control transistor 338 and a ground potential end. A gate of the first enable control transistor 338 is connected with an enable non signal ENB end. A drain of the first enable control transistor 338 is connected with a gate of the fourth NMOS transistor 337 and a gate of the fifth NMOS transistor 336. A source of the fifth NMOS transistor 336 is connected with the ground potential end. A drain of the fifth NMOS transistor 336 is connected with a source of the sixth NMOS transistor 339. A gate of the sixth NMOS transistor 339 is connected with the gate of the third NMOS transistor 340. A drain of the sixth NMOS transistor 339 is connected with the third resistor 335 and a gate of the third PMOS transistor 334, and the other end of the third resistor 335 is connected with a drain of the third PMOS transistor 334 and a gate of the second PMOS transistor 333. A source of the third PMOS transistor 334 is connected with a drain of the second PMOS transistor 333. A source of the second PMOS transistor 333 is connected with the power end VDD. At the same time, the gate of the third PMOS transistor 334 and the gate of the second PMOS transistor 333 are respectively connected with a gate of a fifth PMOS transistor 332 and a gate of a fourth PMOS transistor 331 in the current comparison unit 109.

The first enable control NMOS transistor 338 controls on and off of the reference current unit 108 through the enable non signal ENB.

The current comparison unit 109 is composed of a second enable control transistor 342, the fourth PMOS transistor 331, the fifth PMOS transistor 332, the seventh NMOS transistor 329, and the eighth NMOS transistor 330. A gate of the second enable control transistor 342 is connected with an enable signal EN end. A source of the second enable control transistor 342 is connected with the power end VDD. A drain of the second enable control transistor 342 is connected with a drain of the fifth PMOS transistor 332 and a drain of the seventh NMOS transistor 329 on one hand, and is connected with an output end VCOMP of the current comparison unit 109 on the other hand. A source of the fifth PMOS transistor 332 is connected with a drain of the fourth PMOS transistor 331. A source of the fourth PMOS transistor 331 is connected with the power end VDD. A gate of the fifth PMOS transistor 332 and a gate of the fourth PMOS transistor 331 are respectively connected with the gate of the third PMOS transistor 334 and the gate of the second PMOS transistor 333 in the reference current unit 108. A source of the seventh NMOS transistor 329 is connected with a drain of the eighth NMOS transistor 330. The source of the seventh NMOS transistor 329 is connected with the ground potential end. The gate of the seventh NMOS transistor 329 and the gate of the eighth NMOS transistor 330 are respectively connected with the gate of the first NMOS transistor 327 and the gate of the second NMOS transistor 328 in the load current mirror unit 107.

The second enable control PMOS transistor 342 controls on and off of the current comparison unit 109 through the enable signal EN, and makes the output end (a high-resistance node) VCOMP have a high-level initial state to avoid current leakage in the hysteresis shaping unit 110.

In the load current mirror unit 107, the reference current unit 108, and the current comparison unit 109, the first resistor 326, the first NMOS transistor 327 and the second NMOS transistor 328 in the load current mirror unit 107, and the seventh NMOS transistor 329 and the eighth NMOS transistor 330 in the current comparison unit 109 form a common-gate common-source current mirror structure to proportionally mirror the extracted load current to the current comparison unit 109. The third NMOS transistor 340, the fourth NMOS transistor 337, the fifth NMOS transistor 336, the sixth NMOS transistor 339, and the second resistor 341 in the reference current unit 108 form a common-source common-gate current mirror. The third resistor 335, the second PMOS transistor 333 and the third PMOS transistor 334 in the reference current unit 108 and the fourth PMOS transistor 331 and the fifth PMOS transistor 332 in the current comparison unit 109 form a common-source common-gate current mirror to proportionally mirror the reference current IREF to the current comparison unit 109.

The control current output unit 111 is composed of a third enable control transistor 317, a fourth enable control transistor 344, and a sixth PMOS transistor 318. A gate of the third enable control transistor 317 is connected with an enable signal OCP_EN end. A source of the third enable control transistor 317 is connected with the power end VDD. A drain of the third enable control transistor 317 is connected with a source of the sixth PMOS transistor 318. A gate and a drain of the sixth PMOS transistor 318 are short-circuited and then connected with the gate of the power transistor 103, the Miller compensation capacitor 321, and the output end of the error amplifier. A gate of the fourth enable control transistor 344 is connected with an enable non signal OCP_ENB end. A source of the fourth enable control transistor 344 is connected with the ground potential end. A drain of the fourth enable control transistor 344 is connected with the inverting end of the error amplifier and the voltage dividing end of the feedback resistor network. The enable signal OCP_EN is the output enable signal of the hysteresis shaping unit 110, after it passes through the inverter 343, the enable non signal OCP_ENB is obtained.

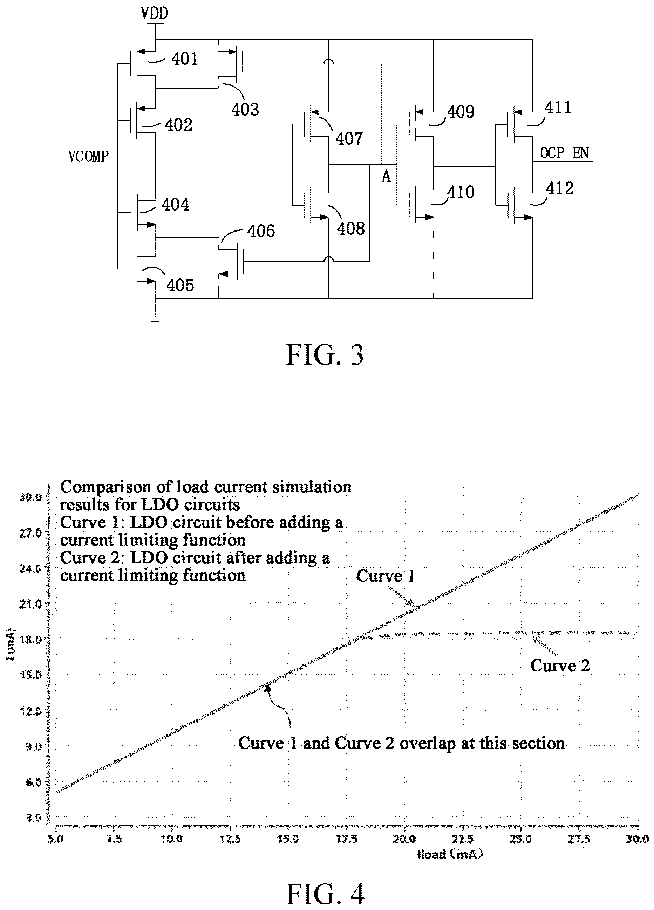

As shown in FIG. 3, in an embodiment of the present disclosure, the hysteresis shaping unit 110 may be a Schmitt shaping circuit, which is composed of a seventh PMOS transistor 401, an eighth PMOS transistor 402, a ninth PMOS transistor 403, a tenth PMOS transistor 407, an eleventh PMOS transistor 409, a twelfth PMOS transistor 411, a ninth NMOS transistor 404, a tenth NMOS transistor 405, an eleventh NMOS transistor 406, a twelfth NMOS transistor 408, a thirteenth NMOS transistor 410, and a fourteenth NMOS transistor 412. A gate of the seventh PMOS transistor 401, a gate of the eighth PMOS transistor 402, a gate of the ninth NMOS transistor 404, and a gate of the tenth NMOS transistor 405 are jointly connected with the output end VCOMP of the current comparison unit 109. A source of the seventh PMOS transistor 401 is connected with the power end VDD. A drain of the seventh PMOS transistor 401 is connected with a source of the eighth PMOS transistor 402 and a drain of the ninth PMOS transistor 403. A drain of the eighth PMOS transistor 402 is connected with a drain of the ninth NMOS transistor 404, a gate of the tenth PMOS transistor 407, and a gate of the twelfth NMOS transistor 408. A source of the ninth NMOS transistor 404 is connected with a drain of the tenth NMOS transistor 405 and a drain of the eleventh NMOS transistor 406. A source of the tenth NMOS transistor 405 is connected with the ground potential end. A source of the ninth PMOS transistor 403 is connected with the power end VDD. A gate of the ninth PMOS transistor 403 is connected with a drain of the tenth PMOS transistor 407 and a drain of the twelfth NMOS transistor 408. A source of the eleventh NMOS transistor 406 is connected with the ground potential end. A gate of the eleventh NMOS transistor 406 is connected with the drain of the tenth PMOS transistor 407 and the drain of the twelfth NMOS transistor 408. A source of the tenth PMOS transistor 407 is connected with the power end VDD. The gate of the tenth PMOS transistor 407 is connected with the gate of the twelfth NMOS transistor 408. The drain of the tenth PMOS transistor 407 is connected with the drain of the twelfth NMOS transistor 408, a gate of the eleventh PMOS transistor 409, and a gate of the thirteenth NMOS transistor 410. A source of the twelfth NMOS transistor 408 is connected with the ground potential end. A source of the eleventh PMOS transistor 409 is connected with the power end VDD. The gate of the eleventh PMOS transistor 409 is connected with the gate of the thirteenth NMOS transistor 410. A drain of the eleventh PMOS transistor 409 is connected with a drain of the thirteenth NMOS transistor 410, a gate of the twelfth PMOS transistor 411, and a gate of the fourteenth NMOS transistor 412. A source of the thirteenth NMOS transistor 410 is connected with the ground potential end. A source of the twelfth PMOS transistor 411 is connected with the power end VDD. The gate of the twelfth PMOS transistor 411 is connected with the gate of the fourteenth NMOS transistor 412. A drain of the twelfth PMOS transistor 411 is connected with a drain of the fourteenth NMOS transistor 412 and an output end OCP_EN of the Schmitt shaping circuit. A source of the fourteenth NMOS transistor 412 is connected with the ground potential end.

The seventh PMOS transistor 401, the eighth PMOS transistor 402, the ninth NMOS transistor 404, and the tenth NMOS transistor 405 form a first-stage inverter. The tenth PMOS transistor 407 and the twelfth NMOS transistor 408 form a second-stage inverter. The eleventh PMOS transistor 409 and the thirteenth NMOS transistor 410 form a third-stage inverter. The twelfth PMOS transistor 411 and the fourteenth NMOS transistor 412 form a fourth-stage inverter. The function of the ninth PMOS transistor 403 and the eleventh NMOS transistor 406 is to regulate a flipped voltage of the first-stage inverter, so as to achieve the hysteresis effect. When an input end VCOMP of the Schmitt shaping circuit is at a high level, point A (an output end of the second-stage inverter) outputs a high level, the ninth PMOS transistor 403 is turned off, and the eleventh NMOS transistor 406 is turned on, causing the flipped voltage of the first-stage inverter to be slightly small. When the input end VCOMP is at a low level, point A outputs a low level, the ninth PMOS transistor 403 is turned on, and the eleventh NMOS transistor 406 is turned off, causing the flipped voltage of the first-stage inverter to be slightly large to achieve the hysteresis effect. In addition, a hysteresis width may be changed by adjusting sizes of the ninth PMOS transistor 403 and the eleventh NMOS transistor 406.

The hysteresis shaping unit 110 can effectively suppress spikes in the input level signal, avoid erroneous activation of the current limiting function, and does not change the state of the input level signal. Therefore, an output signal VCOMP of the current comparison unit 109 is consistent with the level state of an output enable signal OCP_EN of the hysteresis shaping unit 110.

The circuit structure of the current limiting function module 105 in the LDO circuit is described above in detail. The working principle for implementing the current limiting function in the LDO circuit is as shown in FIG. 1 and FIG. 2.

Main functions of the relevant units in the LDO circuit are as follows: the bandgap reference circuit 101 provides the bias current IBIAS and the reference voltage Vref for the error amplifier 102, and provides the reference current IREF for the reference current unit 108 in the current limiting function module 105. The output end (the voltage dividing end) of the feedback resistor network 104 is connected with the inverting end of the error amplifier 102 to form the negative feedback loop of the LDO circuit. The output end of the error amplifier 102 is connected with the gate of the power transistor 103, and the drain of the power transistor 103 is connected with the feedback resistor network 104 and the output end of the LDO circuit to output the stable voltage VOUT.

The working principle of the current limiting function module 105 is as follows: the load current mirror unit 107 proportionally extracts the output current of the power transistor 103 through the mirror transistor, and then provides the output current to the current comparison unit 109 as the load current through the current mirror circuit. The PMOS transistor 325 proportionally mirrors and extracts a current flowing through the power transistor 103. Since the output load current Iload of the LDO is much larger than a branch current flowing through the resistor 322 and the resistor 323 in the feedback resistor network 104, the current flowing through the power transistor 103 is approximately equal to the load current Iload. Therefore, what is actually extracted by the load current mirror unit 107 is the output load current. The reference current unit 108 proportionally mirrors and extracts the reference current IREF provided by the bandgap reference circuit 101 through the current mirror circuit, and then provides the reference current to the current comparison unit 109 as the reference current through the current mirror circuit. The current comparison unit 109 compares the load current with the reference current, and the comparison result forms the high/low level control signal VCOMP outputted to the hysteresis shaping unit 110. After shaping is performed on the inputted control signal VCOMP, the hysteresis shaping unit 110 outputs a control signal with good quality and a hysteresis effect. This control signal is used as an enable control signal OCP_EN, and after it passes through the inverter 343, an enable non signal OCP_ENB is obtained. The enable signal OCP_EN and the enable non signal OCP_ENB are used for controlling the on and off of the control current output unit 111. The on and off of the control current output unit 111 are controlled according to the inputted enable signal OCP_EN and enable non signal OCP_ENB. On the one hand, the enable non signal OCP_ENB controls the disconnection or access of the feedback resistor network 104 through the fourth enable control transistor 344. On the other hand, the enable signal OCP_EN controls the on and off of the control current output unit 111 through the third enable control transistor 317 and the sixth PMOS transistor 318. The bias current is proportionally mirrored to the power transistor 103 according to a current value required to be limited as a target to limit the magnitude of the output current of the power transistor 103, thus achieving the current limiting function.

When the load current is small, the branch current mirrored to the eighth NMOS transistor 330 and the seventh NMOS transistor 329 in the current comparison unit 109 is small, that is, when the extracted load current is less than the reference current obtained by mirroring, the output end VCOMP of the current comparison unit 109 is at a high level. In this case, the enable control signal OCP_EN is at a high level, the enable non signal OCP_ENB is at a low level, the fourth enable control NMOS transistor 344 in the control current output unit 111 is turned off, and the third enable control PMOS transistor 317 is turned off, so that the control current output unit 111 is off, the negative feedback loop works normally, the power transistor 103 provides the load current, and the LDO circuit outputs the stable voltage VOUT.

When the load current is large, the branch current (i.e., the reference current) mirrored to the fourth PMOS transistor 331 and the fifth PMOS transistor 332 in the current comparison unit 109 is relatively small, that is, when the extracted load current is larger than the reference current obtained by mirroring (i.e., the set current threshold), the output end VCOMP of the current comparison unit 109 is at a low level. In this case, the enable control signal OCP_EN is at a low level, the enable non signal OCP_ENB is at a high level, the fourth enable control NMOS transistor 344 in the control current output unit 111 is turned on, a feedback node potential of the feedback resistor network 104 is pulled down to the ground potential, and the negative feedback loop is disconnected; the third enable control PMOS transistor 317 is turned on, the control current output unit 111 is put into operation, the sixth PMOS transistor 318 and the power transistor 103 form a current mirror to mirror the bias current proportionally to the power transistor 103 to limit the magnitude of the output current of the power transistor 103, and the LDO circuit can still work normally at this moment and output the stable voltage VOUT, thus ensuring the direct current bias voltage of the load circuit (such as a radio frequency chip) and enabling the load circuit to work normally.

When the branch current (i.e., the reference current) mirrored to the fourth PMOS transistor 331 and the fifth PMOS transistor 332 in the current comparison unit 109, i.e. the extracted load current, is equal to the reference current obtained by mirroring (i.e., the set current threshold), the output end VCOMP of the current comparison unit 109 maintains a signal state of a previous moment (high level or low level), and the working state of the LDO circuit is the same as that at the previous moment.

The current threshold for enabling the current limiting function may be set by adjusting a mirror ratio in the load current mirror unit 107 and a mirror ratio in the reference current unit 108. The current value required to be limited may be set by adjusting a ratio of the current mirror formed by the sixth PMOS transistor 318 and the power transistor 103. Using the common-source common-gate current mirror can reduce the impact of a power voltage on the mirror current and improve the accuracy of the mirror current.

To sum up, in the LDO circuit having the current limiting function provided by the embodiment of the present disclosure, under low load current working conditions, the control current output unit is off, and the LDO circuit with the negative feedback loop provides the load current to output the stable voltage VOUT. When the load current increases and exceeds the set current threshold, the negative feedback loop is disconnected, and the control current output unit is put into operation. By limiting the magnitude of the current outputted by the power transistor, the LDO circuit can still work normally and output the stable voltage VOUT.

To verify the excellent performance of the low dropout regulator circuit having the current limiting function provided by in the embodiment of the present disclosure, the inventor conducted simulation tests under various load current working conditions on the technical solution (without the current limiting function module) in the existing technology and the technical solution provided by the embodiment of the present disclosure shown in FIG. 2.

The simulation test result of the load current of the LDO circuit is as shown in FIG. 4. The horizontal coordinate in the figure is the load current Iload, and the vertical coordinate is the output current of the power transistor in the LDO circuit. Curve 1 is the simulation test result of the LDO circuit in the technical solution in the existing technology, and curve 2 is the simulation test result of the LDO circuit in the technical solution provided by the present disclosure. An intersection point between curve 1 and curve 2 is the set current threshold (about 18mA in the figure) in the technical solution provided by the present disclosure.

From FIG. 4, it can be seen that in the LDO circuit in the technical solution in the existing technology, when the load current increases, the output current provided by the power transistor in the LDO circuit also increases proportionally. However, in the LDO circuit in the technical solution provided by the present disclosure, when the load current is less than the set current threshold, the output current provided by the power transistor in the LDO circuit increases proportionally; and when the load current increases to and exceeds the set current threshold, due to the activation of the current limiting function, the output current provided by the power transistor in the LDO circuit is limited to a constant current value and no longer increases with the increase of the load current, so that the current limiting effect of the LDO circuit is very significant.

An embodiment of the present disclosure further provides an integrated circuit chip. The integrated circuit chip includes the LDO circuit having the current limiting function described above, of which the function is to adjust the output current through the negative feedback loop and the current limiting control unit in the LDO circuit under different load current working conditions of a radio frequency chip, thus providing a stable direct current bias voltage for the radio frequency chip. The specific structure of the LDO circuit having the current limiting function in the integrated circuit chip will not be repeated here.

In addition, the LDO circuit having the current limiting function provided by the present disclosure may also be used in an electronic device as an important part of a radio frequency component or power supply component. The electronic device described here refers to a communication device that can be used in mobile environments and support multiple communication standards such as GSM, EDGE, TD_SCDMA, TDD_LTE and FDD_LTE, including a mobile phone, a notebook computer, a tablet computer, a vehicle-mounted computer, or the like. In addition, the technical solution provided by the embodiment of the present disclosure is also applicable to other application scenarios of power conversion circuits, such as communication base stations and intelligent connected vehicles.

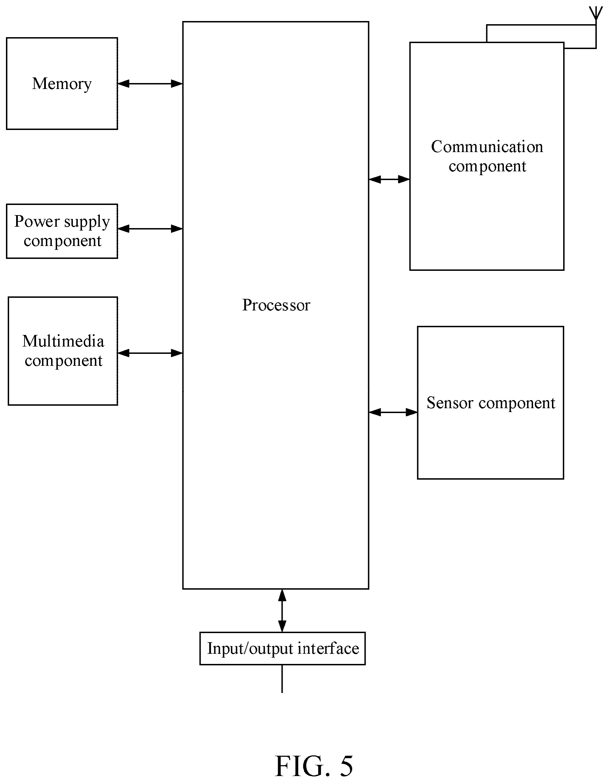

As shown in FIG. 5, the electronic device at least includes a processor and a memory, and may further include a communication component, a sensor component, a power supply component, a multimedia component, and an input/output interface according to actual needs. The memory, the communication component, the sensor component, the power supply component, the multimedia component, and the input/output interface are all connected with the processor. The memory may be a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, or the like. The processor may be a Central Processing Unit (CPU), a Graphic Processing Unit (GPU), a Field Programmable Gate Array (FPGA), an Application-Specific Integrated Circuit (ASIC), a Digital Signal Processing (DSP) chip, or the like. Other communication component, sensor component, power supply component and multimedia component may be implemented using universal components, which will not be specifically described here.

Compared with the existing technology, in the LDO circuit having the current limiting function provided by the present disclosure, the current limiting function module is additionally arranged, the negative feedback loop and the current limiting output unit are controlled to be on and off by comparing the load current with the reference current, so as to control the output current of the LDO circuit, thereby providing a stable direct current bias voltage for a radio frequency chip under working conditions such as large power and a complex application environment. Moreover, the current limiting function of the LDO circuit also protects the radio frequency chip and radio frequency devices on the same link from being damaged, thus greatly improving the service life of the radio frequency chip in the electronic device. Therefore, the LDO circuit having the current limiting function provided by the present disclosure has the beneficial effects such as ingenious and appropriate structural design, low production cost, strong flexibility, and excellent circuit performance.

The LDO circuit having the current limiting function, the chip, and the electronic device provided by the present disclosure have been described in detail. Any obvious modifications made thereto by those skilled in the art without departing from the essence of the present disclosure still fall within the scope of protection of the present disclosure.

## Claims

1. An LDO circuit having a current limiting function, comprising a bandgap reference circuit (101), an error amplifier (102), a power transistor (103), and a feedback resistor network (104), and further comprising a current limiting function module (105), wherein
the bandgap reference circuit (101) provides a bias current and a reference voltage for the error amplifier (102), and provides a reference current for the current limiting function module (105);
an output end of the error amplifier (102) is connected with a gate of the power transistor (103), and a drain of the power transistor (103) is connected with the feedback resistor network (104) and an output end of the LDO circuit;
an output end of the feedback resistor network (104) is connected with an inverting end of the error amplifier (102) to form a negative feedback loop of the LDO circuit; and
a first output end of the current limiting function module (105) is connected with the output end of the feedback resistor network (104) and the inverting end of the error amplifier (102), and a second output end of the current limiting function module (105) is connected with the gate of the power transistor (103) and the output end of the error amplifier (102).

2. The LDO circuit having the current limiting function according to claim 1, wherein the current limiting function module (105) comprises:
a load current mirror unit (107), configured to proportionally mirror and extract an output current of the power transistor (103), and provide the output current to a current comparison unit (109) as a load current;
a reference current unit (108), configured to proportionally mirror and extract a reference current provided by the bandgap reference circuit (101), and provide the reference current to the current comparison unit (109);
the current comparison unit (109), configured to compare an inputted load current with the reference current, a comparison result forming a high/low level control signal outputted to a hysteresis shaping unit (110);
the hysteresis shaping unit (110), configured to perform shaping and hysteresis processing on the inputted control signal, and output a control signal for controlling on and off of a control current output unit (111); and
the control current output unit (111), configured to control disconnection or access of the feedback resistor network (104), and limit a magnitude of the output current of the power transistor (103),
wherein an input end of the reference current unit (108) is connected with the bandgap reference circuit (101), and an output end of the reference current unit (108) is connected with a first input end of the current comparison unit (109); an input end of the load current mirror unit (107) is connected with the power transistor (103), and an output end of the load current mirror unit (107) is connected with a second input end of the current comparison unit (109); and an output end of the current comparison unit (109) is connected with an input end of the hysteresis shaping unit (110), an output end of the hysteresis shaping unit (110) is connected with an input end of the control current output unit (111), a first output end of the control current output unit (111) is connected with the output end of the feedback resistor network (104) and the inverting end of the error amplifier (102), and a second output end of the control current output unit (111) is connected with the output end of the error amplifier (102) and the gate of the power transistor (103).

3. The LDO circuit having the current limiting function according to claim 2, wherein the load current mirror unit (107) is composed of a first PMOS transistor (325), a first resistor (326), a first NMOS transistor (327), and a second NMOS transistor (328), wherein a gate of the first PMOS transistor (325) is connected with the gate of the power transistor (103) and a drain of an enable control PMOS transistor (319), a source of the first PMOS transistor (325) is connected with a power end VDD, a drain of the first PMOS transistor (325) is connected with the first resistor (326) and a gate of the first NMOS transistor (327), the other end of the first resistor (326) is connected with a drain of the first NMOS transistor (327) and a gate of the second NMOS transistor (328), a source of the first NMOS transistor (327) is connected with a drain of the second NMOS transistor (328), a source of the second NMOS transistor (328) is connected with a ground potential end, and at the same time, the gate of the first NMOS transistor (327) and the gate of the second NMOS transistor (328) are respectively connected with a gate of a seventh NMOS transistor (329) and a gate of an eighth NMOS transistor (330) in the current comparison unit (109).

4. The LDO circuit having the current limiting function according to claim 2, wherein
the reference current unit (108) is composed of a third NMOS transistor (340), a fourth NMOS transistor (337), a fifth NMOS transistor (336), a sixth NMOS transistor (339), a second resistor (341), a third resistor (335), a second PMOS transistor (333), a third PMOS transistor (334), and a first enable control transistor (338), wherein a reference current output end of the bandgap reference circuit (101) is connected with the second resistor (341) and a gate of the third NMOS transistor (340), the other end of the second resistor (341) is connected with a drain of the third NMOS transistor (340) and a gate of the fourth NMOS transistor (337), a source of the third NMOS transistor (340) is connected with a drain of the fourth NMOS transistor (337), a source of the fourth NMOS transistor (337) is connected with a source of the first enable control transistor (338) and a ground potential end, a gate of the first enable control transistor (338) is connected with an enable non signal end, a drain of the first enable control transistor (338) is connected with a gate of the fourth NMOS transistor (337) and a gate of the fifth NMOS transistor (336), a source of the fifth NMOS transistor (336) is connected with the ground potential end, a drain of the fifth NMOS transistor (336) is connected with a source of the sixth NMOS transistor (339), a gate of the sixth NMOS transistor (339) is connected with the gate of the third NMOS transistor (340), a drain of the sixth NMOS transistor (339) is connected with the third resistor (335) and a gate of the third PMOS transistor (334), the other end of the third resistor (335) is connected with a drain of the third PMOS transistor (334) and a gate of the second PMOS transistor (333), a source of the third PMOS transistor (334) is connected with a drain of the second PMOS transistor (333), and a source of the second PMOS transistor (333) is connected with the power end; and at the same time, the gate of the third PMOS transistor (334) and the gate of the second PMOS transistor (333) are respectively connected with a gate of a fifth PMOS transistor (332) and a gate of a fourth PMOS transistor (331) in the current comparison unit (109).

5. The LDO circuit having the current limiting function according to claim 2, wherein
the current comparison unit (109) is composed of a second enable control transistor (342), a fourth PMOS transistor (331), a fifth PMOS transistor (332), a seventh NMOS transistor (329), and an eighth NMOS transistor (330), wherein a gate of the second enable control transistor (342) is connected with an enable signal end, a source of the second enable control transistor (342) is connected with a power end, and a drain of the second enable control transistor (342) is connected with a drain of the fifth PMOS transistor (332) and a drain of the seventh NMOS transistor (329) on one hand, and is connected with the output end of the current comparison unit (109) on the other hand; a source of the fifth PMOS transistor (332) is connected with a drain of the fourth PMOS transistor (331), a source of the fourth PMOS transistor (331) is connected with the power end, and a gate of the fifth PMOS transistor (332) and a gate of the fourth PMOS transistor (331) are respectively connected with a gate of a third PMOS transistor (334) and a gate of a second PMOS transistor (333) in the reference current unit (108); and a source of the seventh NMOS transistor (329) is connected with a drain of the eighth NMOS transistor (330), the source of the seventh NMOS transistor (329) is connected with the ground potential end, and a gate of the seventh NMOS transistor (329) and a gate of the eighth NMOS transistor (330) are respectively connected with a gate of a first NMOS transistor (327) and a gate of a second NMOS transistor (328) in the load current mirror unit (107).

6. The LDO circuit having the current limiting function according to claim 2, wherein
the control current output unit (111) is composed of a third enable control transistor (317), a fourth enable control transistor (344), and a sixth PMOS transistor (318), wherein a gate of the third enable control transistor (317) is connected with an enable signal end, a source of the third enable control transistor (317) is connected with a power end, a drain of the third enable control transistor (317) is connected with a source of the sixth PMOS transistor (318), and a gate and a drain of the sixth PMOS transistor (318) are short-circuited and then connected with the gate of the power transistor (103) and the output end of the error amplifier; and a gate of the fourth enable control transistor (344) is connected with an enable non signal end, a source of the fourth enable control transistor (344) is connected with a ground potential end, and a drain of the fourth enable control transistor (344) is connected with the inverting end of the error amplifier and the output end of the feedback resistor network.

7. The LDO circuit having the current limiting function according to claim 2, wherein
the hysteresis shaping unit (110) is a Schmitt shaping circuit with a hysteresis effect, the Schmitt shaping circuit comprises even number stages of inverters and a regulating unit configured to achieve the hysteresis effect, and a hysteresis width is changed by adjusting a size of a transistor in the regulating unit.

8. The LDO circuit having the current limiting function according to any one of claims 2, 6, and 7, wherein
an output signal of the hysteresis shaping unit (110) is used as an enable signal, and passes through an inverter (343) to obtain an enable non signal for controlling the on and off of the control current output unit (111).

9. The LDO circuit having the current limiting function according to claim 2, wherein
when the load current is less than a set current threshold of the reference current, the output end of the current comparison unit (109) is at a high level, the control current output unit (111) is off, and the negative feedback loop access works normally;
when the load current is equal to the set current threshold of the reference current, the LDO circuit maintains a working state of a previous moment; and
when the load current is greater than the set current threshold of the reference current, the output end of the current comparison unit (109) is at a low level, the negative feedback loop is disconnected, and the control current output unit (111) is on to limit the magnitude of the output current of the power transistor (103).

10. The LDO circuit having the current limiting function according to any one of claims 2 to 5, wherein
the current comparison unit (109) extracts the load current and the reference current by using a circuit with a common-gate common-source current mirror structure composed of MOS transistors, and a current threshold for enabling the current limiting function is set by adjusting a magnitude of a mirror ratio.

11. The LDO circuit having the current limiting function according to claim 2 or 6, wherein
in the control current output unit (111), the output current of the power transistor (103) required to be limited is set by adjusting a magnitude of a ratio of a current mirror composed of the sixth PMOS transistor (318) and the power transistor (103).

12. The LDO circuit having the current limiting function according to claim 1, wherein
the current limiting function module (105) generates an enable control signal through hysteresis shaping processing according to a comparison result between the load current and the reference current to control on and off of the current limiting function and the connection or disconnection of the negative feedback loop.

13. An integrated circuit chip, comprising the LDO circuit having the current limiting function according to any one of claims 1 to 12.

14. An electronic device, comprising the LDO circuit having the current limiting function according to any one of claims 1 to 12.
